(19) Europäisches Patentamt
European Patent Office
Office européen des brevets

(11) **EP 3 713 683 B1**

(12) **EUROPÄISCHE PATENTSCHRIFT**

(45) Veröffentlichungstag und Bekanntmachung des Hinweises auf die Patenterteilung:
**06.07.2022   Patentblatt 2022/27**

(21) Anmeldenummer: **18807057.7**

(22) Anmeldetag: **19.11.2018**

(51) Internationale Patentklassifikation (IPC):
***B07C 5/36*** *(2006.01)*

(52) Gemeinsame Patentklassifikation (CPC):
**B07C 5/36; B07C 5/3425; B65G 47/71; G01N 15/147;** B07C 2501/0018; G01N 2015/0046; G01N 2015/149

(86) Internationale Anmeldenummer:
**PCT/EP2018/081793**

(87) Internationale Veröffentlichungsnummer:
**WO 2019/101691 (31.05.2019 Gazette 2019/22)**

(54) **VERFAHREN UND VORRICHTUNG ZUM SORTIEREN VON TEILCHEN EINES MATERIALSTROMS**

METHOD AND DEVICE FOR SORTING PARTICLES IN A STREAM

PROCÉDÉ ET DISPOSITIF DE TRI DE PARTICULES DANS UN FLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2017   DE 102017220792**

(43) Veröffentlichungstag der Anmeldung:
**30.09.2020   Patentblatt 2020/40**

(73) Patentinhaber: **Fraunhofer-Gesellschaft zur Förderung
der angewandten Forschung e.V.
80686 München (DE)**

(72) Erfinder: **GRUNA, Robin
76530 Baden-Baden (DE)**

(74) Vertreter: **Pfenning, Meinig & Partner mbB
Patent- und Rechtsanwälte
Theresienhöhe 11a
80339 München (DE)**

(56) Entgegenhaltungen:
**DE-A1- 10 157 032**

**Beschreibung**

Die Erfindung betrifft ein Verfahren und eine Vorrichtung zum Sortieren von Teilchen eines Materialstroms in zumindest zwei Fraktionen, wobei die Teilchen im Materialstrom mittels zumindest eines Detektors beobachtet werden, Teilchen anhand von durch den Detektor ermittelten Eigenschaften mit Schalldruck beaufschlagt werden, so dass sie unterschiedlichen Fraktionen zugeführt werden.

Die automatische Schüttgutsortierung ermöglicht es, mithilfe digitaler Bildgewinnung und -verarbeitung Schüttgüter mit hohem Durchsatz anhand optisch oder physikalisch erfassbarer Merkmale in verschiedene Fraktionen (z. B. in eine Gut- und Schlechtfraktion) zu separieren. Nach der sensoriellen Erkennung und Bewertung der einzelnen Schüttgutpartikel müssen diese aus dem zu sortierenden Materialstrom entfernt werden, so dass dadurch zwei oder mehrere neue Schüttgutfraktionen entstehen. In der Regel wird die Sortierung dabei so ausgelegt, dass der Anteil der auszuschleusenden Objekte im Verhältnis zum Eingangsmaterialstrom gering ist. Beispielsweise werden in der Lebensmittelinspektion eher selten auftretende Fremdkörper als Schlechtmaterial durch Ausblasen von einem zu bereinigten Materialstrom separiert. In der Mineraliensortierung werden hingegen einzelne Edelsteine oder Edelmetallerze als das Gutmaterial aus dem an Masse überwiegenden Materialstrom von Nebengestein ausgeschleust.

Die Separation stellt eine unverzichtbare Komponente in der automatischen Sortierung dar und entscheidet maßgeblich über deren prinzipielle Einsatzmöglichkeit für ein gegebenes Produkt und die erreichbare Sortierqualität. Bei der Sortierung in zwei Fraktionen setzt sich der Separationsfehler aus dem fehlerhaften Ausschleusen des im Verhältnis überwiegenden Grundmaterials (sog. "Beifang") und fälschlicherweise nichtausgeschleustem Zielmaterial (sog. "Schlupf") zusammen, wobei diese abhängig von der Problemstellung unterschiedlich schwerwiegend sind. Viele Aufgabenstellungen aus der Praxis können mangels geeigneten Separationsverfahren derzeit nicht durch eine automatische Sortierung gelöst werden, obwohl geeignete Sensorlösungen für die Inspektion von Materialen zur Verfügung stehen. Beispiele hierfür sind insbesondere feingranulare Materialien, die eine Korngröße kleiner 2 mm aufweisen. Diese fallen beispielsweise in Form von Pulvern im Pharmazie- und Lebensmittelbereich an oder treten im Recyclingbereich als Feinfraktion bei der Zerkleinerung von Kunststoffen, Altglas oder Bauabfällen auf.

In W. Rauch, "New ejection principle for optical sorters in waste applications", in 7th Sensor-Based Sorting & Control 2016, 2016, S. 141, wird der Stand der Technik zu Separationsverfahren in der sensorgestützten Schüttgutsortierung dargestellt. Diese lassen sich in grob in pneumatische und mechanische Verfahren unterteilen und werden nachfolgend zusammengefasst.

Die pneumatische Separation mittels Druckluftdüsen ist weit verbreitet und wird u. a. in der Lebensmittelinspektion eingesetzt. Die Düsenform sowie die Dauer und Intensität der Druckluftstöße muss dabei an das zu sortierende Produkt angepasst werden. Wesentliche Nachteile dieses Ansatzes sind die hohen Erzeugungskosten für Druckluft sowie die limitierte örtliche Präzision bei der Materialausschleusung. Hinzu kommt, dass durch die Druckluftstöße leicht Luftverwirbelungen entstehen, die den Materialtransport bei der Separation stören und umliegende Schüttgutpartikel stark beeinflussen. Gerade bei feingranularen Materialien ist dies problematisch und kann dazu führen, dass aufgewirbeltes Material in das Gesichtsfeld der Kamera gelangt und die Materialbeobachtung und -bewertung stört.

Ebenfalls pneumatisch arbeiten Saugnäpfe, durch die einzelne Objekte aus einem Materialstrom entfernt werden können. Dafür müssen die Objekte aber eine geeignete Oberflächenbeschaffenheit, Mindestgröße und ähnliche Geometrie aufweisen.

In der Mülltrennung werden Pick-and-Place-Roboterarme eingesetzt, die einzelne Objekte von einem Förderband entfernen. Vorteil ist hierbei, dass das Material in relativ viele verschiedene Fraktionen separiert werden kann. Aufgrund der dafür benötigten komplexen mechanischen Bewegung eines Einzelroboters oder Bahnplanung bei mehreren Roboterarmen ist der Materialdurchsatz dieser Methode jedoch stark limitiert. Hinzu kommen hohe Anschaffungs- und Wartungskosten für die Roboterarme sowie die Einschränkung auf große und mechanisch greifbare Objekte.

Einfachere mechanische Trennverfahren arbeiten mit Klappen, mechanischen Fingern, verfahrbaren Transportbahnen oder Schiebern, die die auszuschleusenden Objekte von einem Transportband entfernen oder durch Stöße von einer definierten Bewegungsbahn abbringen. Sämtliche mechanische Verfahren haben den Nachteil, dass sie durch die diskrete mechanische Auslegung (z. B. die Anzahl der Bewegungselemente) über eine begrenzte Ortsauflösung für relativ große Objekte verfügen und diese nur in eine vorgegebene Richtung ausschleusen können. Zudem sind diese in ihrem Wirkungsbereich auf eine Gerade oder ebene Fläche beschränkt. D. h., selbst wenn die 3D-Position eines auszuschleusenden Partikels bekannt ist, muss diese für die Separation auf eine Ebene oder Gerade gebracht werden und kann nicht frei im 3D-Raum erfasst werden.

In der DE 101 57 032 A1 wird ein Verfahren zum Sortieren von Partikeln aus einem Partikelgemisch, welches über eine Auffangeinrichtung bewegt wird beschrieben, wobei auszusortierende Partikel aufgrund ihrer Absorptions- bzw. Reflexionseigenschaften von nicht auszusortierenden Partikeln getrennt werden. Die Partikel werden dazu mit Strahlung eines eingestellten Wellenlängenbereichs bestrahlt wodurch ein Teil der Partikel in Richtung der Auffangeinrichtung beschleunigt wird.

DE-A-10 2014 207 157 zeigt eine Vorrichtung nach dem Oberbegriff von Anspruch 1 sowie ein Verfahren nach dem Oberbegriff von Anspruch 12, wobei eine Ausblaseinheit vorgesehen ist.

Aufgabe der vorliegenden Erfindung ist es, ein Verfahren und eine Vorrichtung zum Sortieren von Teilchen eines Materialstroms anzugeben, mit dem Teilchen unabhängig von ihrer Größe, insbesondere kleine Teilchen, mit hoher Ortsauflösung zum Sortieren erfassbar sind. Auch soll ein schnelles Sortieren ermöglicht werden.

Diese Aufgaben werden gelöst durch das Verfahren zum Sortieren von Teilchen eines Materialstroms in zumindest zwei Fraktionen nach Anspruch 1 und die Vorrichtung zum Sortieren von Teilchen eines Materialstroms nach Anspruch 12. Die jeweiligen abhängigen Ansprüche geben vorteilhafte Weiterbildungen des erfindungsgemäßen Verfahrens und der erfindungsgemäßen Vorrichtung an.

Es soll zunächst das erfindungsgemäße Verfahren zum Sortieren von Teilchen beschrieben werden. Es werden in diesem Verfahren Teilchen eines Materialstroms in zumindest zwei Fraktionen sortiert. Dazu werden die Teilchen im Materialstrom mittels zumindest eines Detektors beobachtet. Der Detektor detektiert Werte zumindest einer Eigenschaft der Teilchen, anhand derer die Teilchen zu sortieren sind sowie zumindest eine Position der Teilchen zu zumindest einem Zeitpunkt.

Als Eigenschaften, anhand derer die Teilchen sortiert werden, kommen alle Eigenschaften in Frage, die detektierbar sind. Der zumindest eine Detektor ist dann gerade ein Detektor, der geeignet ist, die entsprechende Eigenschaft zu detektieren. Als Eigenschaft der Teilchen soll hierbei eine Dimension verstanden werden, in der sich die Teilchen unterscheiden. Teilchen, die sich in der Eigenschaft unterscheiden haben dann unterschiedliche Werte der Eigenschaft. Sollen beispielsweise Teilchen mit unterschiedlichen Farben in Fraktionen gleicher Farbe sortiert werden, so wäre die Eigenschaft hier die Farbe und die Werte der Eigenschaft beispielsweise Rot, Grün, usw., also die tatsächliche Farbe, die ein gegebenes Teilchen hat. Als Detektor würde in diesem Beispiel ein Detektor eingesetzt, der in der Lage ist, zu erkennen, welche Farbe ein Teilchen hat. Mit dem Detektor könnten also die Werte, also beispielsweise Rot, Grün usw., der Eigenschaft "Farbe" detektiert werden. Dass also der zumindest eine Detektor Werte zumindest einer Eigenschaft der Teilchen detektiert bedeutet, dass der zumindest eine Detektor die Teilchen anhand der zumindest einen Eigenschaft unterscheiden kann.

Als Materialstrom soll hier eine Menge von Teilchen verstanden werden, in der Teilchen mit unterschiedlichen Werten der zumindest einen Eigenschaft vorhanden sind. Vorzugsweise bewegen sich dabei die Teilchen in einem Strom, es bewegen sich also beispielsweise die Mehrzahl der Teilchen oder alle Teilchen parallel zueinander oder im Wesentlichen parallel zueinander in Richtung einer Strömungsrichtung.

Unter einer Fraktion soll hierbei eine Menge von Teilchen verstanden werden, in der die Teilchen überwiegend oder alle den gleichen Wert der Eigenschaft haben, anhand derer die Teilchen sortiert werden.

Erfindungsgemäß detektiert der Detektor den Wert der zumindest einen Eigenschaft zusammen mit der Position der Teilchen zu zumindest einem Zeitpunkt. Der Detektor ist dazu vorzugsweise ein ortsauflösender Detektor.

Erfindungsgemäß werden die Teilchen mit unterschiedlichen Werten der Eigenschaft dann dadurch Unterschiedlichen der Fraktionen zugeführt, dass die Teilchen mit Strahlungsschalldruck beaufschlagt werden. Vorzugsweise wird dabei der Strahlungsschalldruck zeitlich variierend in Abhängigkeit von den Messungen des Detektors erzeugt. Bevorzugterweise werden die Teilchen im erfindungsgemäßen Verfahren so im Materialstrom bewegt, dass sie sich entlang bekannter Bahnen mit bekanntem zeitlichem Verlauf ihrer Position bewegen. Wird dann eines der Teilchen mit einem bestimmten Wert der zumindest einen Eigenschaft an einem bestimmten Ort detektiert, so kann aufgrund der Kenntnis der Bewegung der Teilchen ohne Weiteres bestimmt werden, ob und wenn ja zu welcher Zeit und an welchem Ort das Teilchen mit dem Strahlungsschalldruck beaufschlagt werden muss, um der Fraktion zugeführt zu werden, die seiner Eigenschaft entspricht. Der Strahlungsschalldruck wird dann also so erzeugt, dass er zu jenem Zeitpunkt, an dem das Teilchen am vorgesehenen Ort der Wechselwirkung mit dem Strahlungsschalldruck ist, einen Wert hat, der das entsprechende Teilchen mit der erforderlichen Kraft beaufschlagt, um das Teilchen der seiner Eigenschaft entsprechenden Fraktion zuzufügen.

Der Schallstrahlungsdruck (auch akustischer Strahlungsdruck oder "Quartzwind", engl. acoustic radiation pressure) stellt den genutzten physikalische Effekt für den beschriebenen Lösungsansatz dar. Dieser entspricht einem nichtlinearen Effekt in der Akustik, der insbesondere in starken Ultraschallfeldern, zum Beispiel ab einem Schalldruckpegel von 120 dB auftritt (vgl. K. Hasegawa und H. Shinoda, "Aerial display of vibrotactile sensation with high spatial-temporal resolution using large-aperture airborne ultrasound phased array", in 2013 World Haptics Conference (WHC), 2013, S. 31-36). Die Schallwellenausbreitung wird dann stark unsymmetrisch verzerrt, sodass im zeitlichen Mittel ein von Null verschiedener Gleichdruck in dem von Schallwellen durchstrahlten Medium entsteht. Dieser sog. Schallstrahlungsdruck äußert sich an einem Hindernis oder einer Grenzfläche im Schallfeld als konstante Kraft, die senkrecht zur Ausbreitungsrichtung des Schalls wirkt. Nach Hoshi, M. Takahashi, T. Iwamoto, und H. Shinoda, "Noncontact tactile display based on radiation pressure of airborne ultrasound", IEEE Trans. Haptics, Bd. 3, Nr. 3, S. 155-165, 2010, gilt für den Schallstrahlungsdruck P (in $P\alpha$) unter Annahme einer ebenen Welle:

$$P = \alpha E = \alpha \, p^2 / (\rho c^2)$$

wobei E der Energiedichte des Ultraschalls (in $\frac{J}{m^3}$), $p$ dem Schalldruck (in $P\alpha$), c der Schallgeschwindigkeit (in $\frac{m}{s}$) und p der Dichte des Mediums (in kg/m$^3$) entspricht. Der Schallstrahlungsdruck P ist somit proportional zur Energiedichte $E$, die auch als der Schalldruck bezeichnet wird. Die Konstante $\alpha$ liegt im Intervall $1 \leq \alpha \leq 2$ und ist durch $\alpha \sim 1 + R^2$ abhängig von dem Reflektionskoeffizienten R der Objektoberfläche. Wird der Ultraschall perfekt von der Objektoberfläche reflektiert ist $\alpha = 2$. Im Fall vollständiger Absorption ist $\alpha = 1$. Wird ein Ultraschallstrahl senkrecht an der Objektoberfläche reflektiert, erfährt diese eine konstante Kraft in Richtung des einfallenden Ultraschallstrahls. Aus der oberen Gleichung ist ersichtlich, dass die räumliche und zeitliche Verteilung des Schallstrahlungsdrucks P durch eine räumliche und zeitliche Modulation des Schalldrucks p kontrolliert werden kann. Im Nachfolgenden wird das räumliche Schalldruckfeld zum Zeitpunkt t durch $p_t$ (x, y, z) mit x, y, z $\in$ R notiert.

In einer vorteilhaften Ausgestaltung der Erfindung kann der Strahlungsschalldruck daher so erzeugt werden, dass er an einem jeweiligen Wechselwirkungsort der Teilchen eine von dem Wert der zumindest einen Eigenschaft der entsprechenden Teilchen abhängige Kraft auf die entsprechenden Teilchen bewirkt. Der Wechselwirkungsort wird dabei aus der durch den Detektor detektierten Position des jeweiligen Teilchens ermittelt, z. B. aufgrund der Kenntnis der Bewegung des Teilchens im Materialstrom.

In einer vorteilhaften Ausgestaltung der Erfindung können sich die Teilchen zum Zeitpunkt der Detektion ihrer Position und ihres Wertes der zumindest einen Eigenschaft im freien Fall befinden. Dies kann vorteilhaft sein, da die Fallbewegung der Teilchen sehr genau beschreibbar ist, so dass auch der Ort des Teilchens zur Beaufschlagung mit dem Strahlungsschalldruck sehr genau bekannt ist. Alternativ können sich die Teilchen aber auch in Bewegung beispielsweise auf einer Rutsche befinden oder auf einem Bandsortierer bewegt werden.

Vorteilhafterweise können die Wechselwirkungsorte der Teilchen, also jene Orte, an denen die Teilchen mit dem Strahlungsschalldruck jeweils beaufschlagt werden, aus der jeweils detektierten Position des Teilchens bei Detektion mittels des Detektors, sowie der Bewegung der Teilchen und einer Geometrie eines zum Transport der Teilchen im Materialstrom verwendeten Aufbaus bestimmt werden. Besonders vorteilhaft kann dabei die Bewegung der Teilchen auch dadurch bestimmt werden, dass die Teilchen zumindest zweimal detektiert werden. Voraussetzung ist hier allerdings, dass die Teilchen bei der ersten Detektion und der zweiten Detektion einander zuordenbar sind. Davon unabhängig kann die Bewegung der Teilchen vorteilhaft aus den Gegebenheiten der Messvorrichtung bestimmt werden, da im Normalfall die Teilchen dort alle im Wesentlichen die gleiche Bewegung vollziehen und diese ohne Weiteres bestimmbar ist.

Vorteilhafterweise kann der Strahlungschalldruck, mit dem die Teilchen beaufschlagt werden, mittels zumindest eines Ultraschall-Phased-Arrays erzeugt werden. Vorteilhaft können auch zwei Ultraschall-Phased-Arrays verwendet werden, die so angeordnet sind, dass ihre Schallerzeugungsrichtungen, also jene Richtungen, in denen die Ultraschall-Phased-Arrays jeweils Schall imitieren, in einem nicht verschwindenden Winkel zueinander angeordnet sind oder einander gegenüber angeordnet sind. Bevorzugterweise sind das eine oder die mehreren Ultraschall-Phased-Arrays so angeordnet, dass ihre Schallerzeugungsrichtungen auch in einem nicht verschwindenden Winkel zu dem Materialstrom stehen, also jener Richtung, in der sich die Teilchen im Materialstrom , vorzugswseise im Einflussbereich der oder der Ultraschall-Phased-Arrays, durchschnittlich bewegen. Die Ultraschall-Phased-Arrays ermöglichen es dabei, den Strahlungsschalldruck räumlich und zeitlich variierend zu erzeugen. Auf diese Weise muss ein zu bewegendes Teilchen nicht exakt einen bestimmten Punkt durchlaufen, um mit Strahlungsschalldruck beaufschlagt werden zu können. Es reicht vielmehr, wenn das Teilchen den ausgedehnteren Einflussbereich des Ultraschall-Phased-Arrays durchläuft, also jenen Bereich, in dem das Ultraschall-Phased-Array Schalldruck erzeugen kann. Die Verwendung eines Ultraschall-Phased-Arrays ist besonders vorteilhaft, da mit einem solchen zu einem gegebenen Zeitpunkt Kraftwirkungen an mehreren Orten bewirkbar sind, so dass mehrere Teilchen gleichzeitig gezielt mit Strahlungsschalldruck beaufschlagbar sind. Das bedeutet, dass mit einem Ultraschall-Phased-Array gleichzeitig Teilchen an unterschiedlichen Orten mit Strahlungsschalldruck beaufschlagbar sind, wobei diese Orte durch Bereiche getrennt sein können, in denen kein Strahlungsschalldruck zu dem gegebenen Zeitpunkt erzeugt wird.

Ultraschall-Phased-Arrays, also elektronisch gesteuerte Ultraschallgruppenstrahler, ermöglichen eine Fokussierung von Ultraschallwellen, so dass Schalldruckfelder mit lokalen Gebieten maximalen Schalldruck erzeugt werden können, sog. akustischer Fokus.

Ultraschall-Phased-Arrays können aus einer linearen oder matrixförmigen Anordnung einzelner Schwingerelementen aufgebaut sein, die Ultraschallwellen erzeugen, z. B. mit Hilfe des Piezo-Effekts. Diese können durch einen Signalgenerator elektronisch einzeln angesteuert werden und ermöglichen es, z. B. durch Phasenmodulation, also einer definierten zeitversetzten Anregung der Schwingerelemente, synthetische Schalldruckfelder $p_t$, z. B. mit bestimmter Einschallrichtung, Fokuslage und -größe, zu erzeugen, wofür das Array nicht mechanisch bewegt werden muss. In W. Rauch, "New ejection principle for optical sorters in waste applications", in 7th Sensor-Based Sorting & Control 2016, 2016, S. 141, wird das Schalldruckfeld eines konkreten 18 x 18 Arrays modelliert und die resultierende Kraft innerhalb eines Fokuspunkts hergeleitet und berechnet. Durch eine zeitliche Variation der Phasenmodulation kann die Fokuslage dynamisch verschoben werden. Zudem können auch mehrere unterschiedliche Fokuspunkte zeitgleich erzeugt werden, siehe hierzu T. Carter, S. A. Seah, B. Long, B. Drinkwater, und S. Subramanian, "Ultra-Haptics: multi-point mid-air haptic feedback for touch surfaces", in Proceedings on the 26th annual ACM symposium on User interface software and technology, 2013, S. 505-514, und S. Inoue, Y. Makino, und H. Shinoda, "Active touch perception produced by airborne ultrasonic haptic hologram", in 2015 IEEE World Haptics Conference (WHC), 2015, S. 362-367.

Aus der Gleichung

$$P = \alpha E = \alpha\, p^2 / (\rho c^2)$$

geht hervor, dass der Schallstrahlungsdruck $P$ proportional zum Quadrat des gesamten Schalldrucks p ist, der sich bei Nutzung mehrerer Ultraschallerzeuger durch deren additive Überlagerung ergibt. Eine erhöhte Krafteinwirkung auf Materiapartikel (z. B. für eine Separation von Partikel mit größerer Masse) kann daher über eine Erhöhung des gesamten Schalldrucks $p$ erreicht werden. Dies kann z.B. durch eine Erhöhung der Anzahl der Ultraschallerzeuger oder durch eine Erhöhung des Schalldrucks der einzelnen Ultraschallerzeuger erreicht werden (z. B. durch Anlegen einer höheren Eingangsspannung, siehe hierzu auch T. Hoshi, D. Abe, und H. Shinoda, "Adding Tactile Reaction to Hologram", in Proceedings - IEEE International Workshop on Robot and Human Interactive Communication, 2009, S. 7-11. für Details).

Die Fokuspunkte sind von einem Luftstrom umgeben, der durch den einhergehenden Druckgradienten erzeugt wird. Dieser kann mathematisch über die Eulerschen Gleichungen der Strömungsmechanik beschrieben werden, siehe hierzu T. Hoshi, M. Takahashi, T. Iwamoto, und H. Shinoda, "Noncontact tactile display based on radiation pressure of airborne ultrasound", IEEE Transactions on Haptics, Bd. 3, Nr. 3, S. 155-165, 2010 für Details. Dieser Luftstrom kann sich in bestimmten Situationen negativ auf den Separierungsvorgang Auswirkungen, da unter Umständen Luftverwirbelungen entstehen, die ein fehlerhaftes Ausschleusen (insb. kleiner) Materialpartikeln bewirken können. Erschwerend kann hinzukommen, dass die erzeugten Fokuspunkte von lokalen Nebendruckmaxima umgeben sein können, die ebenfalls lokale Luftströmungen erzeugen, auch wenn diese eine deutlich geringeren Schallstrahlungsdruck und damit Druckgradienten als der Fokuspunkt aufweisen (ungefähr um Faktor 20 geringer). Für die Erzeugung modulierter Strahlungsschalldruckfelder für die Materialseparierung ist es daher vorteilhaft, wenn diese durch ein Verfahren erzeugt werden, dass die Anzahl und die Intensität der Nebendruckmaxima minimiert und/oder die induzierten Luftströme auf Vorteilhafte Weise für die Materiatrennung mitberücksichtigt. Zudem kann die Stärke des induzierten Luftstroms an einem Fokuspunkt über die Impulsdauer des erzeugten Schallstrahlungsdrucks beeinflusst werden. Über die Eulerschen Gleichungen der Strömungsmechanik kann gezeigt werden, dass der Luftstrom durch eine Verkürzung der Impulsdauer des erzeugten Schallstrahlungsdrucks reduziert werden kann, siehe hierzu T. Hoshi, D. Abe, und H. Shinoda, "Adding Tactile Reaction to Hologram", in Proceedings - IEEE International Workshop on Robot and Human Interactive Communication, 2009, S. 7-11. für Details.

Technisch ist es möglich, durch eine geeignete Phasenmodulation bzw. Signalerzeugung näherungsweise beliebige zeitliche-variable Schalldruckfelder $p_t(x, y, z)$ zu erzeugen. In A. Marzo, S. A. Seah, B. W. Drinkwater, D. R. Sahoo, B. Long, und S. Subramanian, "Holographic acoustic elements for manipulation of levitated objects", Nat. Commun., Bd. 6, S. 8661, Okt. 2015, wird ein Verfahren beschrieben, mit dem spezielle Schalldruckfelder für die Manipulation kleiner Objekte erzeugt werden können. Die hierfür benötigte Phasenmodulation wird vorzugsweise algorithmisch auf einem Computer berechnet. Mit dem berechneten und erzeugten Schalldruckfeld können kleine Objekte verschoben, rotiert oder in Schwebe gehalten werden. Dies schließt auch die Erzeugung ziehender Kräfte auf Objekte in Richtung des Ultraschall-Phased-Arrays mit ein. Die akustische Manipulation von Objekten wird auch als Akustophorese oder Levitation bezeichnet und wird derzeit vorwiegend in der Biologie/Biochemie für die Manipulation und Sortierung von Zellen (P. Li u.a., "Acoustic separation of circulating tumor cells", Proc. Natl. Acad. Sci., Bd. 112, Nr. 16, S. 4970-4975, Apr. 2015) und den Transport kleinster Flüssigkeitsmengen eingesetzt (D. Foresti, M. Nabavi, M. Klingauf, A. Ferrari, und D. Poulikakos, "Acoustophoretic contactless transport and handling of matter in air", Proc. Natl. Acad. Sci., Bd. 110, Nr. 31, S. 12549-12554, Juli 2013).

Mit dem in K. Melde, A. G. Mark, T. Qiu, und P. Fischer, "Holograms for a-coustics", Nature, Bd. 537, Nr. 7621, S. 518-522, Sep. 2016, beschriebenen Verfahren kann die Erzeugung komplexer akustischer Hologramme für die Manipulation kleiner Objekte weiter vereinfacht und verfeinert werden. Hierfür werden spezielle akustisch wirksame Bauelemente angefertigt und vor die Ultraschallerzeuger angebracht, die dann ein Schalldruckfeld mit spezifiziertem Phasenprofil erzeugen.

Das erfindungsgemäße Verfahren ermöglicht es, die Teilchen in zwei oder drei oder noch mehr unterschiedliche Fraktionen zu sortieren. Durch die Verwendung eines oder mehrerer Ultraschall-Phased-Arrays wie oben beschrieben können die Teilchen auch zum Sortieren nicht nur mit einem Stoß in eine Richtung versehen werden, sondern auf komplexeren Bahnen bewegt werden, was die Zahl der möglichen Fraktionen erhöht.

In einer vorteilhaften Ausgestaltung der Erfindung kann der Strahlungsschalldruck als akustisches Hologramm erzeugt werden, eine Technik, die zum Beispiel in A. Marzo, S. A. Seah, B. W. Drinkwater, D. R. Sahoo, B. Long, und S. Subramanian, "Holographic acoustic elements for manipulation of levitated objects", Nat. Commun., Bd. 6, S. 8661, Okt. 2015 beschrieben wird. Hierdurch können die Teilchen vorteilhaft zu einer Rotation und/oder zu einer Bewegung entlang vorgegebener Bahnen angeregt werden. Auf diese Weise ergeben sich zusätzliche Freiheiten bei der geometrischen Ausgestaltung einer zur Ausführung des Verfahrens verwendeten Vorrichtung. Außerdem kann die Zahl der Fraktionen, in die die Teilchen sortiert werden, erhöht werden.

In einer vorteilhaften Ausgestaltung der Erfindung kann eine Bewegung der Teilchen detektiert werden, die sich dadurch ergibt, dass die Teilchen mit dem Strahlungsschalldruck beaufschlagt werden. Es kann dann aus der detektierten Bewegung zumindest eine physikalische Eigenschaft des entsprechenden Teilchens bestimmt werden. Es kann beispielsweise eine Masse und/oder eine Dichte des entsprechenden Teilchens bestimmt werden. Grundsätzlich können alle Eigenschaften auf diese Weise bestimmt werden, die die Reaktion von Teilchen auf den Strahlungsschalldruck beeinflussen. Eine beispielhafte Anwendung hierfür könnte z. B. die optische Überprüfung von einfachen Halbzeugen, wie beispielsweise Kunststoffkugeln, auf Lufteinschlüsse sein. Derartige Lufteinschlüsse sind äußerlich nicht erkennbar und können nicht mit herkömmlicher Kameratechnik erfasst werden. Die Lufteinschlüsse wirken sich jedoch auf die Masse der beobachteten Teilchen aus. Durch eine gezielte Anregung durch ein Schalldruckfeld kann ein Kraftstoß auf die zu untersuchenden Teilchen ausgeübt werden. Abhängig von der Masse der Teilchen, also dem Vorhandensein von Lufteinschlüssen, ändert sich nun der Impuls bzw. das Bewegungsverhalten des Teilchens. Diese Änderung kann beispielsweise mit einer Flächenkamera erfasst werden und ausgewertet werden, so dass die Teilchen anhand ihrer Masse bewertet und vorteilhafterweise auch sortiert werden können.

Vorteilhafterweise kann der zumindest eine Detektor eine oder mehrere Kameras umfassen, mit denen die Teilchen detektierbar sind. In einer solchen Ausgestaltung der Erfindung können alle mit einer Kamera bestimmbaren Eigenschaften zur Sortierung verwendet werden. Vorteilhafterweise kann mit der Kamera außerdem die Bewegung der Teilchen infolge der Beaufschlagung mit Strahlungsdruck detektierbar sein. Auf diese Weise können, beispielsweise wie hier vorstehend beschrieben, auch physikalische Eigenschaften der Teilchen ermittelt und zur Sortierung verwendet werden.

Das Sortierungsverfahren mit Hilfe von Strahlungsschalldruck ist nicht auf Teilchen bestimmter Größen beschränkt, eignet sich aber besonders vorteilhaft für Teilchen, deren Korngrößen kleiner oder gleich 10 mm, vorzugsweise kleiner oder gleich 5 mm, besonders bevorzugt kleiner oder gleich 2 mm sind.

Daher ist es bevorzugt, wenn zumindest eine Fraktion der Teilchen im Materialstrom eine derartige Korngröße hat.

Vorteilhafterweise kann der Strahlungsschalldruck mittels Ultraschall erzeugt werden. Vorteilhafterweise hat dabei der Ultraschall eine Frequenz von größer oder gleich 10 MHz, vorzugsweise größer oder gleich 50 MHz, vorzugsweise größer oder gleich 100 MHz, besonders bevorzugt größer oder gleich 300 MHz. Eine Obergrenze der Frequenz muss nicht eigens definiert werden. Sie kann durch die technischen Realisierungsmöglichkeiten automatisch gegeben sein. Die Frequenz des Ultraschalls entscheidet über das örtliche Auflösungsvermögen der erzeugten Schallstrahlungsdruckfelder. Mit höheren Frequenzen können kleinere akustische Strukturen erzeugt werden, z.B. kleinere Fokuspunkte für kleinere Materialien.

Erfindungsgemäß wird außerdem eine Vorrichtung zum Sortieren von Teilchen eines Materialstroms angegeben. Die Vorrichtung weist erfindungsgemäß eine Transportvorrichtung zum Transport des Materialstroms auf. Dabei kann eine solche Transportvorrichtung jede Vorrichtung sein, die die Teilchen mit einer Bewegung beaufschlagt. Es ist nicht erforderlich, dass die Transportvorrichtung die Teilchen über den gesamten Verlauf des Materialstroms führt. Auch eine Vorrichtung, die beispielsweise die Teilchen auswirft, so dass diese anschließend eine Fallbewegung ausführen oder rutschen, soll als Transportvorrichtung angesehen werden.

Die erfindungsgemäße Vorrichtung weist außerdem zumindest einen Detektor zur Beobachtung der Teilchen im Materialstrom auf. Der Detektor kann beispielsweise ein optischer Detektor wie z. B. eine Kamera sein. Andere Arten von Detektoren sind abhängig von der Eigenschaften möglich, anhand derer die Teilchen sortiert werden sollen. Mit dem Detektor sind Werte zumindest einer Eigenschaft der Teilchen, anhand derer die Teilchen zu sortieren sind, sowie zumindest eine Position der Teilchen zu zumindest einem Zeitpunkt detektierbar.

Die erfindungsgemäße Vorrichtung weist außerdem eine Vorrichtung zur Erzeugung eines Strahlungsschalldruckes bzw. eines Strahlungsschalldrucksfeldes auf, mit dem Teilchen mit unterschiedlichen Werten der Eigenschaft unterschiedlichen Fraktionen zuführbar sind.

Die Transportvorrichtung kann beispielsweise ein Förderband umfassen, mit dem die Teilchen im Materialstrom in einem Sichtbereich des Detektors und einem Einflussbereich des Strahlungsschalldruckes transportierbar sind.

Vorteilhafterweise ist mit der erfindungsgemäßen Vorrichtung ein Verfahren zum Sortieren von Teilchen, wie es oben beschrieben wurde, ausführbar. Die Ausführungen zum erfindungsgemäßen Verfahren gelten daher für die erfindungsgemäße Vorrichtung entsprechend.

Im Folgenden soll die Erfindung anhand einiger Figuren beispielhaft erläutert werden. Gleiche Bezugszeichen kennzeichnen dabei gleiche oder entsprechende Merkmale. Die in den Beispielen beschriebenen Merkmale können auch unabhängig vom konkreten Beispiel realisiert sein und unter den Beispielen kombiniert werden.

Es zeigt

Figur 1 eine beispielhafte Ausgestaltung eines erfindungsgemäßen Verfahrens zum Sortieren von Teilchen eines Materialstroms in drei Fraktionen,

Figur 2 eine weitere beispielhafte Ausgestaltung eines solchen erfindungsgemäßen Verfahrens,

Figur 3 eine dritte vorteilhafte Ausgestaltung des erfindungsgemäßen Verfahrens,

Figur 4 ein Funktionsprinzip eines Ultraschall-Phased-Arrays,

Figur 5 eine schematische Übersicht verschiedener möglicher Anordnungen zur Durchführung des erfindungsgemäßen Verfahrens und

Figur 6 ein schematisches Ablaufdiagramm eines erfindungsgemäßen Verfahrens.

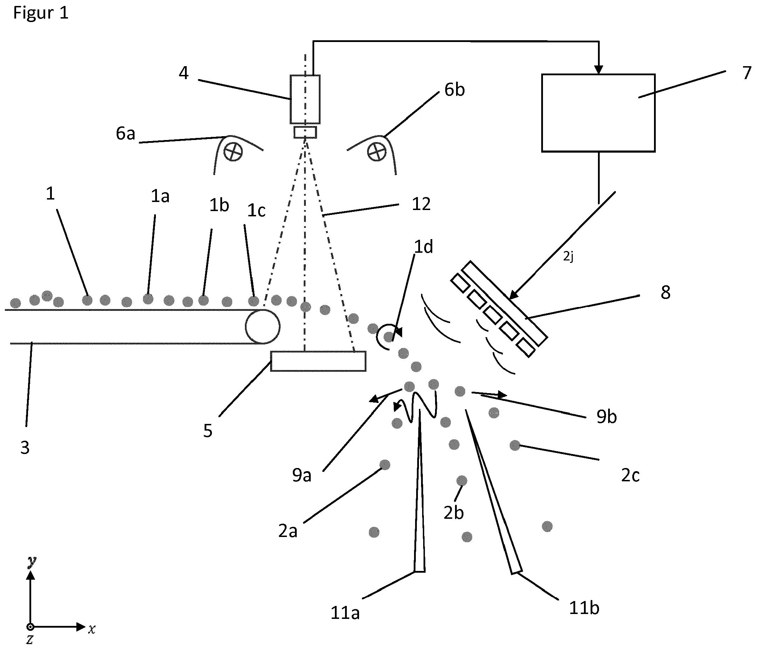

Figur 1 zeigt beispielhaft eine Ausführungsforum eines erfindungsgemäßen Verfahrens zum Sortieren von Teilchen 1a, 1b, 1c eines Materialstroms 1 in drei Fraktionen 2a, 2b, 2c. Dabei werden die Teilchen 1a, 1b, 1c des Materialstroms 1 mittels einer Fördervorrichtung 3, hier ein Förderband 3, in den Sichtbereich eines Detektors 4, hier einer optischen Kamera 4, bewegt, so dass der Detektor 4 die Teilchen 1a, 1b, 1c des Materialstroms 1 beobachten kann. Um die Sichtbarkeit zu verbessern, wird der Materialstrom 1 mittels zweier Lichtquellen 6a, 6b beleuchtet und vor einem Hintergrund 5 vorbeigeführt. Im gezeigten Beispiel transportiert die Fördervorrichtung 3 den Materialstrom 1 bis zum Hintergrund 5 und bis zum Sichtbereich der Kamera 4, im Sichtbereich der Kamera 4 befinden sich die Teilchen 1a, 1b, 1c jedoch im freien Fall. Anstelle des Förderbandes 3 könnten z. B. auch Rutschen 3 und andere Transportvorrichtungen verwendet werden. Die Kamera 4 kann z. B. eine Zeilen- oder Flächenkamera sein.

Der Detektor 4 misst Werte zumindest einer Eigenschaft, hier einer optischen Eigenschaft der Teilchen 1a, 1b, 1c, anhand derer die Teilchen 1a, 1b, 1c zu sortieren sind. Darüber hinaus detektiert der Detektor 4 zumindest eine Position der Teilchen 1a, 1b, 1c zu zumindest einem Zeitpunkt.

Die Detektionsergebnisse des Detektors 4 werden einer Recheneinheit 7 zugeführt, die diese Ergebnisse auswertet. Beispielsweise kann das aufgenommene Bild durch Bildverarbeitungsverfahren ausgewertet werden. Die Recheneinheit 7 kann dann für jedes Teilchen 1a, 1b, 1c, innerhalb des Materialstroms 1 eine Sortierentscheidung treffen. Diese gibt an, welcher der Fraktionen 2a, 2b, 2c das Teilchen zugeführt werden soll. Darüber hinaus berechnet die Recheneinheit 7 für jedes Teilchen 1a, 1b, 1c das zur Zuführung in die für es vorgesehene Fraktion mit einem Strahlungsschalldruck beaufschlagt werden muss, die Positionen $x(t_0)$, $x(t_1)$, $x(t_2)$, .... zu den Zeitpunkten to, $t_1$, $t_2$ ..., zu denen das Teilchen 1a, 1b, 1c den räumlichen und zeitlichen Wirkungsbereich eines Ultraschall-Phased-Arrays 8 durchschreitet. Dies kann beispielsweise mittels des in R. Gruna, "Fördersystem, Anlage zur Schüttgutsortierung mit einem solchen Fördersystem und Transportverfahren", DE 102014207157 A1, beschriebenen Verfahren erfolgen. Basierend auf der Sortierentscheidung sowie den Bewegungsinformationen aller mit Strahlungsschalldruck zu beaufschlagenden Teilchen 1a, 1b, 1c innerhalb eines Zeitfensters werden in der Recheneinheit 7 ein optimaler Beaufschlagungszeitpunkt $t_{sep}$ und ein hierfür erforderlichen Schalldruckfeld $p_{t\,sep}\,(x, y, z)$ berechnet. Hierdurch erfahren die auszuschleusenden Objekte eine Kraft 9a, 9b mit der sie von ihrer Flugrichtung im freien Fall in die ihnen zugedachte Fraktion 2a, 2c abgelenkt werden. Im in Figur 1 gezeigten Beispiel ist das Verfahren so ausgestaltet, dass eine Fraktion 2b der Teilchen 1a, 1b, 1c dadurch gebildet wird, dass die dieser Fraktion 2b zugeordneten Teilchen 1a, 1b, 1c nicht mit Strahlungsschaltung beaufschlagt werden, so dass sie sich im freien Fall weiterbewegen. Dieses ist die Fraktion 2b. Zur Ablenkung der Teilchen in die Fraktion 2a werden diese Teilchen 1a, 1b, 1c mit einem drückenden Schalldruckfeld beaufschlagt, das eine drückende Kraft 9a ausübt. Zur Ablenkung von Teilchen 1a, 1b, 1c in die Fraktion 2c können diese mit einem Schalldruck beaufschlagt werden, der eine ziehende Kraft 9b ausübt.

Die Erzeugung des Schalldrucksfeldes $p_{t\,sep}\,(x, y, z)$ erfolgt durch das Ultraschall-Phased-Array 8, das über die Recheneinheit 7 gesteuert wird. Eine Kraftwirkung auf die Teilchen 1a, 1b, 1c kann dabei auch mehrfach durch mehrere aufeinanderfolgende Schalldruckfelder $p_{t\,sep,\,i}\,(x, y, z)$, $i = 1, ....n$, erfolgen, während das Objekt den Wirkungsbereich des Ultraschall-Phased-Arrays 8 durchschreitet. Es können außerdem Teilchen 1d durch beispielsweise die Erzeugung von akustischen Hologrammen innerhalb des Schalldruckfeldes, z. B. durch sog. akustische Fallen, Strudel und/oder Pinzetten zur Rotation oder zur Bewegung entlang definierter Bahnen gebracht werden, z. B. um eine Kollision mit der Umgebung oder mit anderen Teilchen 1a, 1b, 1c zu vermeiden.

Die in Figur 1 gezeigte Vorrichtung weist Schranken 11a und 11b auf, mittels derer die Fraktionen 2a, 2b, 2c voneinander getrennt werden. Die Beaufschlagung mit Kräften 9a, 9b durch das Ultraschall-Phased-Array 8 verändert im hier gezeigten Beispiel die Flugbahn in für die Fraktionen 2a, 2b, 2c unterschiedlicher Weise, so dass die entsprechenden Teilchen 1a, 1b, 1c auf unterschiedliche Seiten der Trennelemente 11a bzw. 11b fallen.

Im in Figur 1 gezeigten Beispiel weist die Kamera 4 einen Sichtwinkel auf, der zu dem mit 12 gekennzeichneten Sichtbereich führt. Der Sichtbereich 12 erstreckt sich vom Ende der Transportvorrichtung 3 bis zu der der Transportvorrichtung 3 gegenüber liegenden Kante des Hintergrunds 5, so dass die Teilchen 1a, 1b, 1c des Materialstroms 1 durch die Kamera 4 während ihres Fluges vor dem Hintergrund 5 beobachtbar und detektierbar sind.

In den hier gezeigten Beispielen wird der Strahlungsschalldruck mittels des Ultraschall-Phased-Arrays 8 erzeugt. Das Element 8 kann jedoch in allen Beispielen allgemeiner auch als Strahlungsschalldruckquelle 8 verstanden werden, die in einem einfacheren Beispiel auch nur zur Einrichtung eines eindimensionalen Strahlungsfalldruckimpulses an einem festgelegten Ort eingerichtet zu sein braucht. Dies ist zum Beispiel dann ausreichend, wenn der Materialstrom 1 sich definiert hintereinander her bewegende Teilchen 1a, 1b, 1c aufweist, so dass vorausgesetzt werden kann, dass sich die Teilchen 1a, 1b, 1c sämtlich an einem definierten Punkt vorbeibewegen, auf den die Strahlungsschalldruckquelle 8 einwirken kann.

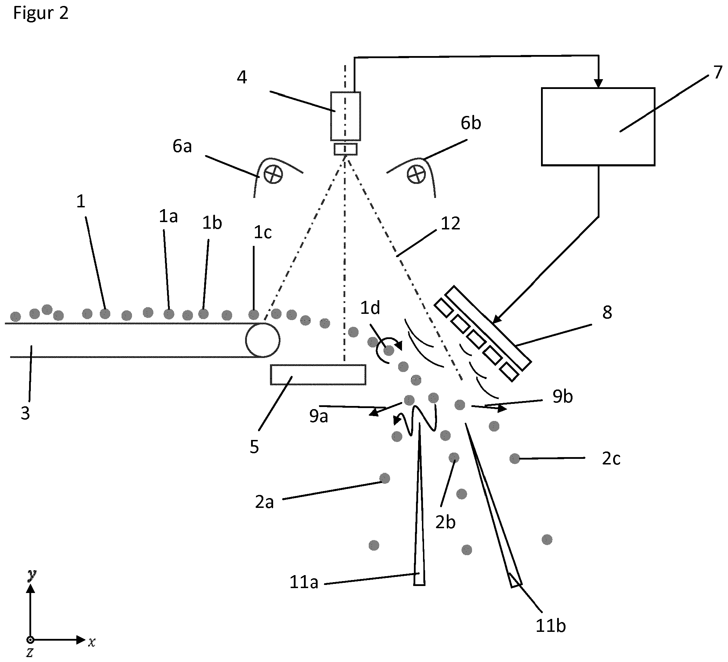

Figur 2 zeigt eine Ausgestaltung der Erfindung, in welcher die Kamera 4 einen breiteren Sichtbereich 12 aufweist. In Figur 2 erstreckt sich der Sichtbereich 12 vom Ende der Transportvorrichtung 3 in Richtung der Transportrichtung bis zum Einflussbereich des Ultraschall-Phased-Arrays 8 auf die Teilchen 1a, 1b, 1c. Die Kamera 4 kann beispielsweise eine weitwinklige Flächenkamera sein. Da die Kamera 4 in dem in Figur 2 gezeigten Beispiel auch den Separationsvorgang im Einflussbereich des Ultraschall-Phased-Arrays 8 beobachtet, kann die Kamera 4 zusätzlich zur Materialprüfung und Ableitung von Sortierentscheidungen auch zur Beobachtung des Separationsvorgangs genutzt werden. Dies ermöglicht es, mehrere Schalldruckfelder adaptiv an das tatsächliche Bewegungsverhalten der zu sortierenden Teilchen 1a, 1b, 1c anzupassen und schritthaltend anzuwenden. Dadurch kann eine präzisere und robustere Separation der Teilchen 1a, 1b, 1c vom Materialstrom 1 erreicht werden, indem z. B. Kollisionen mit anderen Partikeln vermieden und weitere Sortierentscheidungen nachträglich mitberücksichtigt werden. Alternativ zu der gezeigten weitwinkligen Flächenkamera können auch mehrere Kameras mit überlappendem Gesichtsfeld verwendet werden.

Die anderen Merkmale der Figur 2 entsprechen jenen der Figur 1, so dass auf die Beschreibung dort verwiesen werden soll.

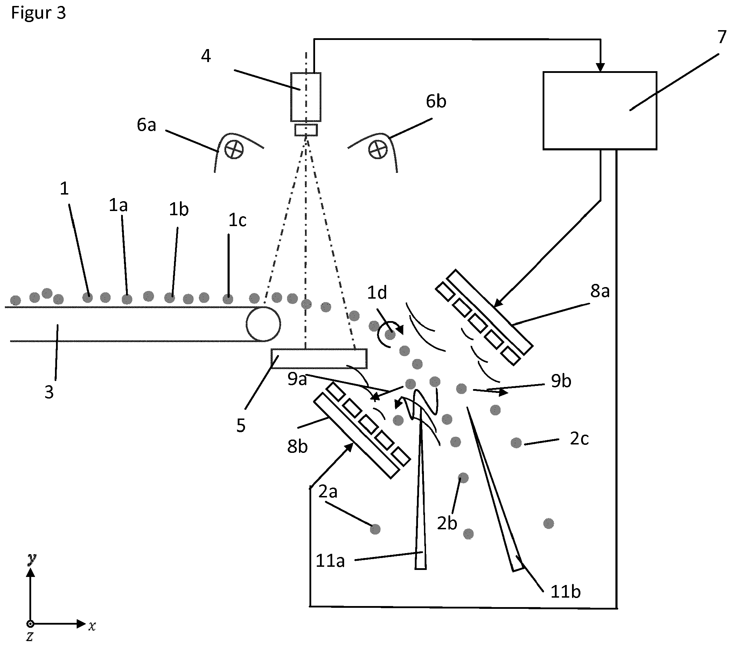

Figur 3 zeigt eine Ausführungsform der Erfindung entsprechend den Figuren 1 und 2, wobei jedoch zusätzlich zu dem in den Figuren 1 und 2 gezeigten Ultraschall-Phased-Arrays 8 ein weiteres Ultraschall-Phased-Array 8b verwendet wird, so dass in Figur 3 zwei Ultraschall-Phased-Arrays 8a und 8b zum Einsatz kommen. Die Ultraschall-Phased-Arrays 8a und 8b sind einander in dem in Figur 3 gezeigten Beispiel genau gegenüber voneinander angeordnet, so dass ihre Flächen parallel zueinander liegen und ihre Wirkrichtungen einander entgegengesetzt stehen. Die Steuervorrichtung 7 steuert basierend auf den Messergebnissen des Detektors 4 beide Ultraschall-Phased-Arrays 8a und 8b. Es hat sich gezeigt, dass die Signalerzeugung mit zwei gegenüberliegenden Ultraschall-Phased-Arrays 8a, 8b in der Regel einfacher und weniger komplex ist. Dadurch kann der Berechnungsaufwand in der Recheneinheit 7 verringert werden, wodurch der Matrialdurchsatz bei der Schüttgutsortierung erhöht werden kann. Die anderen in Figur 3 gezeigten Merkmale entsprechen den in Figur 1 und 2 gezeigten Merkmalen, so dass auf die Beschreibung dort verwiesen werden soll.

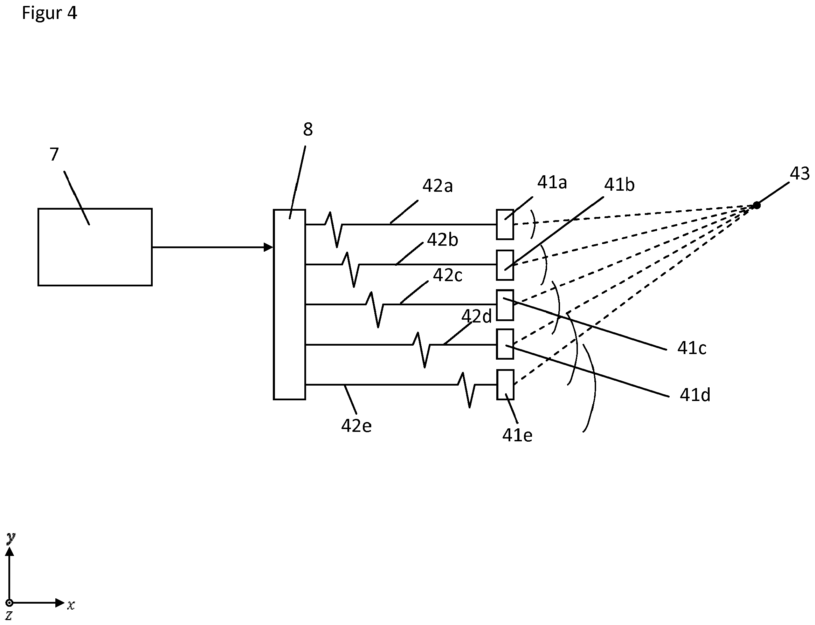

Figur 4 zeigt beispielhaft einen Ultraschall-Phased-Array 8 mit einer Steuerung 7, wie es in den in Figur 1 bis 3 gezeigten Beispielen zum Einsatz kommen kann. Das Ultraschall-Phased-Array 8 in Figur 4 weist eine Vielzahl von Piezo-Schallerzeugern 41a, 41b, 41c, 41d, 41e auf, die einzeln mit Steuerungssignalen 42a, 42b, 42c, 42d und 42e beaufschlagt werden. Jeder der Piezo-Schallerzeuger 41a bis 41e erzeugt Wellenfronten, die sich interferierend überlagern. Durch Steuerung der Amplitude und Phase der Signale 42a bis 42e, mit denen die Piezo-Schallerzeuger 41a bis 41e beaufschlagt werden, kann die Interferenz der durch die Schallerzeuger 41a bis 41e erzeugten Wellenfronten so gestaltet werden, dass an einem gezielt ausgewählten Punkt 43 eine maximale konstruktive Interferenz vorliegt. An einem solchen Punkt 43 ist der Strahlungsschalldruck maximal. Es kann daher der Strahlungsschalldruck durch gezielte Steuerung der Amplitude und Phase der Signale 42a bis 42e in einem dreidimensionalen Bereich vor dem Ultraschall-Phased-Array 8 ortsaufgelöst eingestellt werden. Dort wo die maximale konstruktive Interferenz erzeugt wird, werden dann Teilchen 1a, 1b, 1c zur Sortierung mit Strahlungsschalldruck beaufschlagt. Die Lage und Anzahl der gleichzeitig erzeugten Interferenzmaxima ist dabei grundsätzlich frei wählbar, so dass auch komplexe Strahlungsschalldruckfelder erzeugt werden können. Zur Ausgestaltung der Signale 42a bis 42e können die in den oben beschriebenen Veröffentlichungen ausgeführten Erkenntnisse zu akustischen Hologrammen und berührungslosen taktilen Anzeigen verwendet werden.

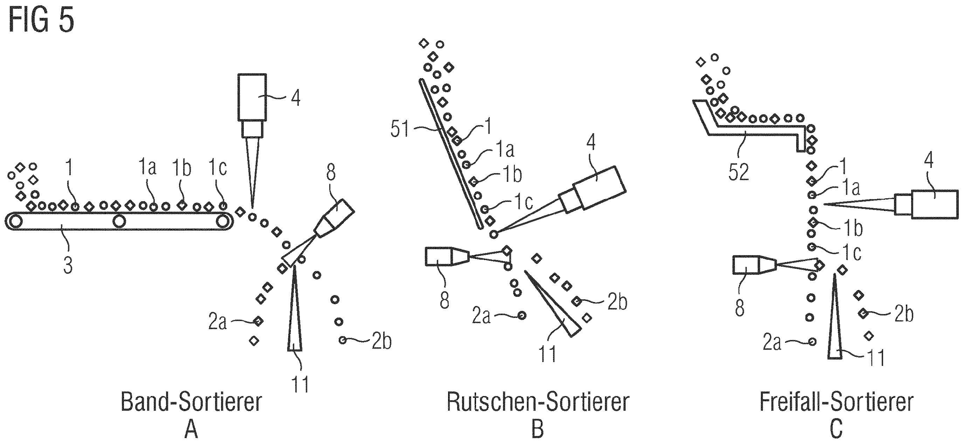

Figur 5 zeigt in den Teilfiguren A, B und C unterschiedliche Konzepte zum Führen des Materialstroms 1. Das in Figur 5A gezeigte Konzept entspricht dabei dem in Figur 1 bis 3 gezeigten Konzept, wo die Teilchen 1a, 1b, 1c des Materialstroms 1 mittels eines Förderbandes 3 transportiert werden, dann im Sichtbereich der Kamera 4 in einen freien Fall übergehen und im freien Fall durch eine Vorrichtung 8 zur Erzeugung von Strahlungsschalldruck in unterschiedliche Fraktionen 2a und 2b unterteilt werden. In Figur 5 ist die Vorrichtung 8 zur Erzeugung eines Strahlungsschalldrucks eingerichtet, um nur eindimensional zu wirken. Es kann jedoch auch in der Figur 5 jeweils wie in den Figuren 1 bis 3 ein Ultraschall-Phased-Array 8 eingesetzt werden.

Die unterschiedlichen Fraktionen 2a und 2b werden durch die Strahlungsschalldruckquelle 8 auf unterschiedlichen Seiten einer Trennvorrichtung 11 sortiert.

Figur 5B zeigt eine alternative Ausgestaltung, in der der Materialstrom 1 mit den Teilchen 1a, 1b, 1c auf einer Rutsche 51 rutscht, an deren Ende die Teilchen 1a, 1b, 1c wiederum in den freien Fall übergehen. Es werden auch hier die Teilchen 1a, 1b, 1c im freien Fall durch einen Detektor 4 detektiert und durch eine Vorrichtung 8 zur Erzeugung eines Strahlungsschalldrucks in zwei Fraktionen 2a, 2b auf unterschiedlichen Seiten einer Trennvorrichtung 11 sortiert.

Figur 5C zeigt eine Ausgestaltung der Erfindung, in der die Teilchen 1a, 1b, 1c von einer Auflage 52 herunter rieseln, um im Fallen den Materialstrom 1 zu formen. Die Teilchen 1a, 1b, 1c werden im freien Fall durch die Kamera 4 beobachtet und auf Grundlage der Beobachtung mittels der Vorrichtung 8 zur Erzeugung eines Strahlungsschalldruckes in zwei Fraktionen 2a und 2b auf unterschiedliche Seiten einer Trennvorrichtung 11 sortiert.

In den Teilfiguren der Figur 5 werden nur jene Teilchen 1a, 1b, 1c mit einem Strahlungsschalldruck beaufschlagt, die einer der beiden Fraktionen 2a, 2b zugeordnet werden sollen, während die Teilchen der anderen Fraktion nicht mit Strahlungsschalldruck beaufschlagt werden, und dadurch ihrer freien Falltrajektorie weiter folgen.

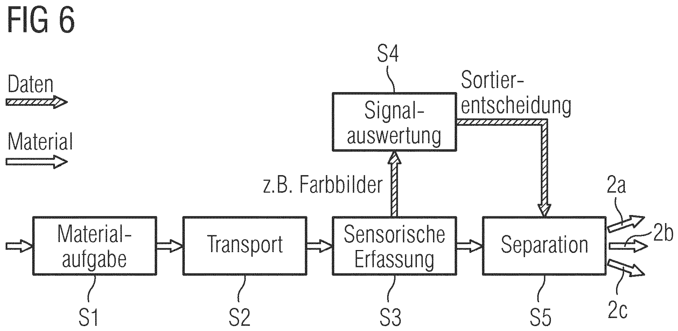

Figur 6 zeigt schematisch ein Ablaufdiagramm eines Beispiels der vorliegenden Erfindung. Es wird in einem ersten Schritt S1 Material bereitgestellt, das die zu sortierenden Teilchen 1a, 1b, 1c enthält. Diese werden dann im Schritt S2 transportiert und dabei in einem Schritt S3 mittels eines Detektors 4 sensorisch erfasst. Das Detektorsignal wird (z. B. Farbbilder des Teilchens 1), werden in einer Signalauswertung S4 ausgewertet und es wird für jedes Teilchen eine Sortierentscheidung getroffen. Diese Sortierentscheidung wird einem Separationsschritt S5 zugeführt, in dem die Teilchen aufgrund der Sortierentscheidung unterschiedlichen Fraktionen 2a, 2b, 2c zugeführt werden.

**Patentansprüche**

1. Verfahren zum Sortieren von Teilchen (1a, 1b, 1c) eines Materialstromes (1) in zumindest zwei Fraktionen (2a, 2b, 2c), wobei

     die Teilchen (1a, 1b, 1c) im Materialstrom (1) mittels zumindest eines Detektors (4) beobachtet werden,

der zumindest eine Detektor (4) Werte zumindest einer Eigenschaft der Teilchen (1a, 1b, 1c), anhand derer die Teilchen (1a, 1b, 1c) zu sortieren sind, sowie zumindest eine Position der Teilchen (1a, 1b, 1c) zu zumindest einem Zeitpunkt detektiert,

**dadurch gekennzeichnet, dass** zumindest jene einer der Fraktionen (2a, 2b, 2c) zuzuführenden Teilchen (1a, 1b, 1c) an zumindest einem Wechselwirkungsort mit Strahlungsschalldruck beaufschlagt werden, so dass Teilchen (1a, 1b, 1c) mit unterschiedlichen Werten der Eigenschaft Unterschiedlichen der Fraktionen (2a, 2b, 2c) zugeführt werden.

2. Verfahren nach dem vorhergehenden Anspruch, wobei der Strahlungsschalldruck so erzeugt wird, dass er an einem jeweiligen Wechselwirkungsort der Teilchen (1a, 1b, 1c), welcher Wechselwirkungsort aus der jeweiligen detektierten Position des entsprechenden Teilchens (1a, 1b, 1c) bestimmt wird, eine von dem Wert der zumindest einen Eigenschaft der entsprechenden Teilchen (1a, 1b, 1c) abhängige Kraft (9a, 9b) auf die entsprechenden Teilchen (1a, 1b, 1c) bewirkt.

3. Verfahren nach einem der vorhergehenden Ansprüche, wobei sich die Teilchen (1a, 1b, 1c) zum Zeitpunkt der Detektion ihrer Position im freien Fall befinden.

4. Verfahren nach einem der vorhergehenden Ansprüche, wobei die Wechselwirkungsorte der Teilchen (1a, 1b, 1c) aus der jeweiligen detektierten Position der Teilchen (1a, 1b, 1c), der Bewegung der Teilchen (1a, 1b, 1c) und einer Geometrie eines zum Transport der Teilchen (1a, 1b, 1c) im Materialstrom (1) verwendeten Aufbaus bestimmt wird.

5. Verfahren nach einem der vorhergehenden Ansprüche, wobei der Strahlungsschalldruck, mit dem die Teilchen (1a, 1b, 1c) beaufschlagt werden, mittels zumindest eines Ultraschall-Phased-Arrays (8) oder mittels zweier bezüglich des Materialstromes (1) mit ihrer Schallerzeugungsrichtung in einem nicht verwindenden Winkel zueinander oder einander gegenüber angeordneten Ultraschall-Phased-Arrays (8) räumlich und zeitlich variierend erzeugt wird.

6. Verfahren nach einem der vorhergehenden Ansprüche, wobei die Teilchen (1a, 1b, 1c) zwei oder drei oder einer Vielzahl von Fraktionen (2a, 2b, 2c) zugeführt werden.

7. Verfahren nach einem der vorhergehenden Ansprüche,
   wobei der Strahlungsschalldruck als akustisches Hologramm erzeugt wird und dadurch die Teilchen (1a, 1b, 1c) zur Rotation und/oder zu einer Bewegung entlang vorgegebener Bahnen angeregt werden.

8. Verfahren nach einem der vorhergehenden Ansprüche,
   wobei eine durch die Beaufschlagung mit dem Strahlungsschalldruck bewirkte Bewegung der Teilchen (1a, 1b, 1c) detektiert wird und aus der detektierten Bewegung zumindest eine physikalische Eigenschaft, vorzugsweise eine Masse und/oder eine Dichte, zumindest eines Teils der Teilchen (1a, 1b, 1c) bestimmt wird.

9. Verfahren nach einem der vorhergehenden Ansprüche,
   wobei der Detektor (4) eine oder mehrere Kameras umfasst, mit der oder mit denen vorzugsweise auch eine Bewegung der Teilchen (1a, 1b, 1c) infolge der Beaufschlagung mit Strahlungsschalldruck detektierbar ist.

10. Verfahren nach einem der vorhergehenden Ansprüche,
    wobei zumindest eine Fraktion der Teilchen (1a, 1b, 1c) im Materialstrom (1) Korngrößen kleiner oder gleich 10 mm, vorzugsweise kleiner oder gleich 5 mm, besonders bevorzugt kleiner oder gleich 2 mm hat.

11. Verfahren nach einem der vorhergehenden Ansprüche,
    wobei der Strahlungsschalldruck durch Ultraschall mit einer Frequenz größer oder gleich 10 MHz, vorzugsweise größer oder gleich 50 MHz, vorzugsweise größer oder gleich 100 MHz, besonders bevorzugt größer oder gleich 300 MHz erzeugt wird.

12. Vorrichtung zum Sortieren von Teilchen (1a, 1b, 1c) eines Materialstromes (1),

    aufweisend eine Transportvorrichtung zum Transport des Materialstromes (1),
    zumindest einen Detektor (4) zum Beobachten der Teilchen (1a, 1b, 1c) im Materialstrom (1),
    wobei mit dem zumindest einen Detektor (4) Werte zumindest einer Eigenschaft der Teilchen (1a, 1b, 1c, anhand derer die Teilchen (1a, 1b, 1c) zu sortieren sind, sowie zumindest eine Position der Teilchen (1a, 1b, 1c) zu zumindest einem Zeitpunkt detektierbar ist, **gekennzeichnet durch**
    zumindest eine Vorrichtung zur Erzeugung eines Strahlungsschalldruckes, mit dem Teilchen (1a, 1b, 1c) mit unterschiedlichen Werten der Eigenschaft unterschiedlichen Fraktionen (2a, 2b, 2c) zuführbar sind.

13. Vorrichtung nach dem vorhergehenden Anspruch, wobei die Transportvorrichtung ein Förderband (3) umfasst, mit dem die Teilchen (1a, 1b, 1c) im Materialstrom (1) in einen Sichtbereich (12) des Detektors (4) und einen Einflussbereich des Strahlungsschalldrucks transportierbar sind.

14. Vorrichtung nach einem der beiden vorhergehenden Ansprüche, wobei mit der Vorrichtung ein Verfahren nach einem der Ansprüche 1 bis 11 ausführbar ist.

## Claims

1. Method for sorting particles (1a, 1b, 1c) of a material flow (1) into at least two fractions (2a, 2b, 2c),

   the particles (1a, 1b, 1c) in the material flow (1) being observed by means of at least one detector (4),
   the at least one detector (4) detects values of at least one property of the particles (1a, 1b, 1c), on the basis of which the particles (1a, 1b, 1c) are to be sorted, and also at least one position of the particles (1a, 1b, 1c) at at least one point in time,
   **characterized in that**
   at least those particles (1a, 1b, 1c) which are to be supplied to one of the fractions (2a, 2b, 2c) are subjected at at least one interaction location to acoustic radiation pressure such that particles (1a, 1b, 1c) with different values of the property are supplied to different ones of the fractions (2a, 2b, 2c).

2. Method according to the preceding claim,
   the acoustic radiation pressure being generated such that, at a respective interaction location of the particles (1a, 1b, 1c), which interaction location is determined from the respective detected position of the corresponding particle (1a, 1b, 1c), it causes a force (9a, 9b), dependent upon the value of the at least one property of the corresponding particles (1a, 1b, 1c), on the corresponding particles (1a, 1b, 1c).

3. Method according to one of the preceding claims,
   the particles (1a, 1b, 1c), at the time of the detection of their position, being in free fall.

4. Method according to one of the preceding claims,
   the interaction locations of the particles (1a, 1b, 1c) being determined from the respective detected position of the particles (1a, 1b, 1c), the movement of the particles (1a, 1b, 1c) and a geometry of a structure used to transport the particles (1a, 1b, 1c) in the material flow (1).

5. Method according to one of the preceding claims, the acoustic radiation pressure to which the particles (1a, 1b, 1c) are subjected being produced by means of at least one ultrasound phased array (8) or by means of two ultrasound phased arrays (8) which are disposed, relative to the material flow (1), with their sound generation direction at a non-vanishing angle to each other or opposite each other, spatially and temporally varying.

6. Method according to one of the preceding claims, the particles (1a, 1b, 1c) being supplied to two or three or a large number of fractions (2a, 2b, 2c).

7. Method according to one of the preceding claims, the acoustic radiation pressure being generated as acoustic hologram, and as a result, the particles (1a, 1b, 1c) being excited for rotation and/or for a movement along specified paths.

8. Method according to one of the preceding claims, a movement of the particles (1a, 1b, 1c) which is produced by the particles being subjected to the acoustic radiation pressure being detected, and from the detected movement, at least one physical property, preferably a mass and/or a density, at least of a part of the particles (1a, 1b, 1c) being determined.

9. Method according to one of the preceding claims, the detector (4) comprising one or more cameras with which preferably also a movement of the particles (1a, 1b, 1c) as a result of being subjected to acoustic radiation pressure can be detected.

10. Method according to one of the preceding claims, at least one fraction of the particles (1a, 1b, 1c) in the material flow (1) having particle sizes less than or equal to 10 mm, preferably less than or equal to 5 mm, particularly preferably less than or equal to 2 mm.

11. Method according to one of the preceding claims, the acoustic radiation pressure being generated by ultrasound having a frequency of greater than or equal to 10 MHz, preferably greater than or equal to 50 MHz, preferably greater than or equal to 100 MHz, particularly preferably greater than or equal to 300 MHz.

12. Device for sorting particles (1a, 1b, 1c) of a material flow (1),

  having a transport device for transport of the material flow (1),
  at least one detector (4) for observing the particles (1a, 1b, 1c) in the material flow (1),
with the at least one detector (4), values of at least one property of the particles (1a, 1b, 1c), on the basis of which the particles (1a, 1b, 1c) are to be sorted, and also at least one position of the particles (1a, 1b, 1c) at at least one point in time being detectable, **characterized by** at least one device for generating an acoustic radiation pressure with which particles (1a, 1b, 1c) with different values of the property can be supplied to different fractions (2a, 2b, 2c).

13. Device according to the preceding claim, the transport device comprising a conveyor belt (3) with which the particles (1a, 1b, 1c) in the material flow (1) can be transported into a visual range (12) of the detector (4) and into an influence range of the acoustic radiation pressure.

14. Device according to one of the two preceding claims, a method according to one of the claims 1 to 11 being implementable with the device.

## Revendications

1. Procédé pour trier des particules (1a, 1b, 1c) d'un flux de matériau (1) en au moins deux fractions (2a, 2b, 2c),

  dans lequel les particules (1a, 1b, 1c) sont observées dans le flux de matériau (1) au moyen d'au moins un détecteur (4), le au moins un détecteur (4) détecte des valeurs d'au moins une propriété des particules (1a, 1b, 1c), sur la base de laquelle les particules (1a, 1b, 1c) doivent être triées, ainsi qu'au moins une position des particules (1a, 1b, 1c) à au moins un moment, **caractérisé en ce qu'**au moins ces particules (1a, 1b, 1c) à amener à l'une des fractions (2a, 2b, 2c) sont soumises à une pression acoustique de rayonnement en au moins un lieu d'interaction, de sorte que des particules (1a, 1b, 1c) avec des valeurs différentes de la propriété sont amenées à différentes des fractions (2a, 2b, 2c).

2. Procédé selon la revendication précédente, dans lequel la pression acoustique de rayonnement est générée de manière à provoquer, en un lieu d'interaction respectif des particules (1a, 1b, 1c), lequel lieu d'interaction est déterminé à partir de la position détectée respective de la particule (1a, 1b, 1c) correspondante, une force (9a, 9b) sur les particules (1a, 1b, 1c) correspondantes dépendant de la valeur de l'au moins une propriété des particules (1a, 1b, 1c) correspondantes.

3. Procédé selon l'une quelconque des revendications précédentes,
dans lequel les particules (1a, 1b, 1c) sont en chute libre au moment de la détection de leur position.

4. Procédé selon l'une quelconque des revendications précédentes,
dans lequel les lieux d'interaction des particules (1a, 1b, 1c) sont déterminés à partir de la position détectée respective des particules (1a, 1b, 1c), du mouvement des particules (1a, 1b, 1c) et d'une géométrie d'une structure utilisée pour transporter les particules (1a, 1b, 1c) dans le flux de matériau (1).

5. Procédé selon l'une quelconque des revendications précédentes,
dans lequel la pression acoustique de rayonnement, à laquelle les particules (1a, 1b, 1c) sont soumises, est générée de manière variable dans l'espace et dans le temps au moyen d'au moins un réseau en phase à ultrasons (8) ou au moyen de deux réseaux en phase à ultrasons (8) disposés l'un par rapport à l'autre ou l'un en face de l'autre par rapport au flux de matériau (1) avec leur direction de génération du son selon un angle non en torsion.

6. Procédé selon l'une quelconque des revendications précédentes,
dans lequel les particules (1a, 1b, 1c) sont amenées à deux ou trois ou à une pluralité de fractions (2a, 2b, 2c).

7. Procédé selon l'une quelconque des revendications précédentes,
dans lequel la pression acoustique de rayonnement est générée sous forme d'hologramme acoustique et les particules (1a, 1b, 1c) sont ainsi excitées à tourner et/ou à se déplacer le long de trajectoires prédéterminées.

8. Procédé selon l'une quelconque des revendications précédentes,
dans lequel un mouvement des particules (1a, 1b, 1c) provoqué par la soumission à la pression acoustique de rayonnement est détecté et au moins une propriété physique, de préférence une masse et/ou une densité, d'au moins une partie des particules (1a, 1b, 1c), est déterminée à partir du mouvement détecté.

9. Procédé selon l'une quelconque des revendications précédentes,
dans lequel le détecteur (4) comprend une ou plusieurs caméras, avec laquelle ou avec lesquelles, de préférence, un mouvement des particules (1a, 1b, 1c) peut également être détecté suite à la soumission à la pression acoustique de rayonnement.

10. Procédé selon l'une quelconque des revendications précédentes,
dans lequel au moins une fraction des particules (1a, 1b, 1c) dans le flux de matériau (1) a des tailles de grains inférieures ou égales à 10 mm, de préférence inférieures ou égales à 5 mm, de manière particulièrement préférée inférieures ou égales à 2 mm.

11. Procédé selon l'une quelconque des revendications précédentes,
dans lequel la pression acoustique de rayonnement est générée par des ultrasons avec une fréquence supérieure ou égale à 10 MHz, de préférence supérieure ou égale à 50 MHz, de préférence supérieure ou égale à 100 MHz, de manière particulièrement préférée supérieure ou égale à 300 MHz.

12. Dispositif pour trier des particules (1a, 1b, 1c) d'un flux de matériau (1),

présentant un dispositif de transport pour le transport du flux de matériau (1),
au moins un détecteur (4) pour observer les particules (1a, 1b, 1c) dans le flux de matériau (1),
dans lequel, avec le au moins un détecteur (4), des valeurs d'au moins une propriété des particules (1a, 1b, 1c), à l'aide de laquelle les particules (1a, 1b, 1c) doivent être triées, ainsi qu'au moins une position des particules (1a, 1b, 1c) peuvent être détectées à au moins un moment,
**caractérisé par**
au moins un dispositif pour générer une pression acoustique de rayonnement, avec laquelle des particules (1a, 1b, 1c) avec des valeurs différentes de la propriété peuvent être amenées à différentes fractions (2a, 2b, 2c).

13. Dispositif selon la revendication précédente,
dans lequel le dispositif de transport comprend une bande transporteuse (3), avec laquelle les particules (1a, 1b, 1c) peuvent être transportées dans le flux de matériau (1) dans une zone de visualisation (12) du détecteur (4) et une zone d'influence de la pression acoustique de rayonnement.

14. Dispositif selon l'une des deux revendications précédentes, dans lequel un procédé selon l'une quelconque des revendications 1 à 11 peut être mis en œuvre avec le dispositif.

Figur 1

Figur 2

14

Figur 3

Figur 4

EP 3 713 683 B1

FIG 5

Band-Sortierer
A

Rutschen-Sortierer
B

Freifall-Sortierer
C

EP 3 713 683 B1

# FIG 6

Daten
⇒

Material
⇒

S4

Signalauswertung

Sortierentscheidung

z.B. Farbbilder

| Material-
aufgabe | Transport | Sensorische
Erfassung | Separation |

2a

2b

2c

S1         S2         S3         S5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10157032 A1
- DE 102014207157 A
- DE 102014207157 A1, R. Gruna


**In der Beschreibung aufgeführte Nicht-Patentliteratur**

- **W. RAUCH.** New ejection principle for optical sorters in waste applications. *7th Sensor-Based Sorting & Control,* 2016, vol. 2016, 141
- **H. SHINODA.** Aerial display of vibrotactile sensation with high spatial-temporal resolution using large-aperture airborne ultrasound phased array. *2013 World Haptics Conference (WHC),* 2013, 31-36
- **HOSHI, M. TAKAHASHI ; T. IWAMOTO ; H. SHINODA.** Noncontact tactile display based on radiation pressure of airborne ultrasound. *IEEE Trans. Haptics,* 2010, vol. 3 (3), 155-165
- **T. CARTER ; S. A. SEAH ; B. LONG ; B. DRINKWATER ; S. SUBRAMANIAN.** Ultra-Haptics: multi-point mid-air haptic feedback for touch surfaces. *Proceedings of the 26th annual ACM symposium on User interface software and technology,* 2013, 505-514
- **S. INOUE ; Y. MAKINO ; H. SHINODA.** Active touch perception produced by airborne ultrasonic haptic hologram. *2015 IEEE World Haptics Conference (WHC),* 2015, 362-367
- **T. HOSHI ; D. ABE ; H. SHINODA.** Adding Tactile Reaction to Hologram. *Proceedings - IEEE International Workshop on Robot and Human Interactive Communication,* 2009, 7-11
- **T. HOSHI ; M. TAKAHASHI ; T. IWAMOTO ; H. SHINODA.** Noncontact tactile display based on radiation pressure of airborne ultrasound. *IEEE Transactions on Haptics,* 2010, vol. 3 (3), 155-165
- **A. MARZO ; S. A. SEAH ; B. W. DRINKWATER ; D. R. SAHOO ; B. LONG ; S. SUBRAMANIAN.** Holographic acoustic elements for manipulation of levitated objects. *Nat. Commun.,* Oktober 2015, vol. 6, 8661
- **P. LI.** Acoustic separation of circulating tumor cells. *Proc. Natl. Acad. Sci.,* April 2015, vol. 112 (16), 4970-4975
- **D. FORESTI ; M. NABAVI ; M. KLINGAUF ; A. FERRARI ; D. POULIKAKOS.** Acoustophoretic contactless transport and handling of matter in air. *Proc. Natl. Acad. Sci.,* Juli 2013, vol. 110 (31), 12549-12554
- **K. MELDE ; A. G. MARK ; T. QIU ; P. FISCHER.** Holograms for a-coustics. *Nature,* September 2016, vol. 537 (7621), 518-522